# FASCICULE DE BREVET EUROPEEN

(11) **EP 1 999 157 B1**
(45) Date de publication et mention de la délivrance du brevet: **14.12.2016**
(21) Numéro de dépôt: 07731156.1
(22) Date de dépôt: 19.03.2007
(51) Int. Cl.: C08B 30/12, C09J 103/02

(54) **PROCEDE DE CUISSON D'UNE MATIERE AMYLACEE A HAUTES MATIERES SECHES POUR LA PREPARATION D'UNE COMPOSITION ADHESIVE**
VERFAHREN ZUM KOCHEN EINES STÄRKEHALTIGEN MATERIALS MIT HOHEM FESTSTOFFGEHALT ZUR HERSTELLUNG EINER KLEBSTOFFZUSAMMENSETZUNG
METHOD FOR COOKING A STARCHY MATERIAL WITH A HIGH SOLIDS CONTENT FOR THE PREPARATION OF AN ADHESIVE COMPOSITION

(30) Priorité: 21.03.2006 FR 0602451
(43) Date de publication de la demande: 10.12.2008
(73) Titulaire: Roquette Frères, 62136 Lestrem (FR)
(72) Inventeur: BASTIEN, Christophe, F-59110 La Madeleine (FR); BOUXIN, Christian, F-59274 Marquillies (FR); DAUCHY, Patrick, F-62136 La Couture (FR); ONIC, Ludivine, F-62660 Beuvry (FR); SABRE, Philippe, F-59270 Saint Jans Cappel (FR)
(74) Mandataire: Cabinet Plasseraud
(86) Numéro de dépôt international: PCT/FR2007/000465
(87) Numéro de publication internationale: WO 2007/107648

(56) Documents cités:
- EP-A2- 0 229 741
- JP-A- 5 320 597
- US-A- 5 340 405

## Description

La présente invention concerne un procédé de cuisson, continu ou discontinu, d'une matière amylacée à haute teneur en matières sèches, les compositions amylacées ainsi obtenues et leur utilisation, notamment en tant qu'adhésifs.

Le but de la présente invention est de proposer un procédé de cuisson relativement simple et peu coûteux, permettant de cuire des compositions aqueuses amylacées liquides à haute teneur en matières sèches. Ce procédé doit permettre l'obtention de solutions aqueuses d'amidons, essentiellement exemptes d'amidon granulaire, ayant à la fois une teneur en matière sèche élevée, supérieure à 35 % en poids et de préférence inférieure à 75 % en poids, une viscosité suffisamment basse pour permettre leur utilisation aisée dans des installations de papeteries et des installations de collage, et une bonne stabilité au stockage, autrement dit des compositions amylacées qui, après refroidissement, ne présentent pas de phénomène de rétrogradation (gélification par réassociation des macromolécules d'amylose).

Divers dispositifs et procédés de production en continu de colles amylacées présentées sous la forme de solutions colloïdales, notamment à hautes matières sèches, ont déjà fait l'objet de publications.

On peut citer la demande de brevet européen EP 0 096 935, qui divulgue un procédé de préparation, notamment en continu, d'une composition adhésive, consistant à soumettre un mélange d'eau et d'amidon granulaire à un traitement mécanique, répété par recyclage. Le cisaillement et l'échauffement produit par friction, généralement limité à une température inférieure à 90 °C, permettent d'obtenir une solution colloïdale d'amidon dans le cadre d'un procédé qui n'est toutefois pas adapté à la production de colles fortement concentrées en matières amylacées. En effet, seules des concentrations comprises entre 5 et 30% sont évoquées et les exemples illustrent des compositions ayant une teneur en matière sèche de l'ordre de 11 à 12% seulement.

Divers brevets déposés aux Etats-Unis proposent de simples moyens de mélange de poudres et de liquides, ne comportant ni apport thermique, ni recyclage. Ce sont, par exemple, les brevets US 4 201 485, US 4 323 314 et US 4 444 508, qui décrivent diverses façons de procéder à des mélanges en continu, de liquides et de poudres, sous des efforts de cisaillement importants, voire très importants.

Ces documents ne citent pas les amidons. Ils ne prévoient pas de moyen de chauffage.

Dans la demande de brevet européen EP 1 609 834, il est proposé de former une composition adhésive aqueuse, à chaud ou à froid, à partir de polymères choisis dans un éventail large, présentant des teneurs en matières sèches comprises dans une vaste gamme, allant de 0,5 à 80%, dans une unité de mélange à haute vitesse de cisaillement. Cette demande qui décrit un procédé de préparation d'une solution colloïdale présentant une matière sèche éventuellement élevée, souligne l'obligation de plusieurs passages dans un système mécanique à haute vitesse de cisaillement, dont on sait qu'il est très coûteux. La Demanderesse considère qu'un tel système, singulièrement coûteux et complexe, est trop difficile à mettre en pratique à l'échelle industrielle.

Dans le domaine du collage du carton ondulé, la demande de brevet européen EP 0 051 883 concerne des préparations hétérogènes, comportant une partie primaire, de matière amylacée gélatinisée sous forme de solution colloïdale, et une partie secondaire, d'amidon granulaire. Seule la partie primaire est soumise à un chauffage modéré avant mélange des deux parties. Une partie de l'amidon, dit secondaire, demeure à l'état granulaire. Ce document ne traite donc pas le problème technique de l'obtention de solutions colloïdales, essentiellement exemptes d'amidon granulaire, présentant des teneurs en matière sèche élevées, supérieures à 35 % en poids.

La demande de brevet japonais JP 05 320597 préconise l'utilisation d'un appareillage de type "Jet Cooker", bien connu de l'homme de l'art, pour la cuisson à haute température (150 °C) d'une suspension aqueuse d'amidon. De l'amidon granulaire est ensuite ajouté à la solution d'amidon gélatinisé de manière à amener la teneur totale en amidon de la composition adhésive amylacée à une valeur supérieure ou égale à 30 % en poids. Ces adhésifs contiennent par conséquent une fraction importante d'amidon granulaire insoluble.

Il en est de même des demandes de brevet européen EP 0 229 741 et EP 0 376 301 qui concernent la préparation de compositions adhésives destinées au collage de carton ondulé, comprenant une partie primaire contenant de l'amidon soluble et une partie secondaire contenant de l'amidon granulaire, seule la partie primaire étant traitée à haute température.

La Demanderesse s'est elle-même intéressée à de telles compositions adhésives et à leur préparation en continu. La demande de brevet français FR 2 283 937 et le brevet US 4 917 870 illustrent l'intérêt qu'elle porte à ce type de préparation.

Le brevet français FR 2 149 640, déposé par la Demanderesse, constitue une première réponse au problème technique d'obtention de compositions à haute teneur en amidon soluble, même si celle-ci n'est que partielle. Ce document divulgue un procédé de préparation d'empois d'amidons ayant une teneur en matières sèches pouvant atteindre 70 %, par dégradation enzymatique d'amidon natif ou chimiquement modifié.

La qualité des solutions colloïdales obtenues selon ce procédé n'est toutefois généralement pas suffisante pour retenir l'attention de l'homme de l'art. En particulier, les propriétés rhéologiques et adhésives, obtenues avec les amidons de céréales et de légumineuses, sont insuffisantes. Le traitement d'amidons de tubercules estérifiés ou éthérifiés est le seul, en réalité, à présenter un intérêt certain.

Il existe ainsi toujours un besoin d'un procédé permettant de concilier les exigences suivantes :
- équipement mécaniquement simple et peu coûteux,
- fonctionnement fiable et nécessitant peu d'énergie,
- possibilité de traiter tous types d'amidons qu'il s'agisse d'amidons de tubercules, de céréales ou de légumineuses,
- obtention de compositions ayant des teneurs en matières sèches élevées, supérieures à 35 % en poids, permettant des économies substantielles d'énergie lors du séchage de ces compositions,
- obtention de compositions ayant des propriétés adhésives et rhéologiques satisfaisantes, notamment une viscosité Brookfield ne dépassant de préférence pas 6000 centipoises (à 25 °C), et une aptitude à la formation d'un film.

Il est ainsi du mérite de la Demanderesse d'avoir pu, après de longs travaux, déterminer qu'il était possible de parvenir aux fins recherchées en mettant en oeuvre un procédé en deux étapes :
- une première étape de mélange/gélification pendant laquelle on mélange, à pression atmosphérique et sous une agitation suffisante pour éviter la formation de grumeaux, une poudre d'amidon et un fluide aqueux contenant déjà une certaine quantité d'amidon tout en chauffant à une température et pendant une durée suffisantes pour amorcer la gélification de l'amidon en suspension, et une deuxième étape de chauffage de la solution colloïdale ainsi obtenue à des température supérieure à 120 °C, impossible à mettre en oeuvre à pression atmosphérique. Cette deuxième étape de chauffage à haute température se traduit au niveau moléculaire par une gélatinisation complète de l'amidon, par la rupture des liaisons hydrogène intermoléculaires et par la dissolution des macromolécules. Les solutions d'amidon ainsi obtenues se caractérisent par une viscosité relativement faible eu égard à leur fortes teneurs en matières sèches et par une excellente stabilité. On n'observe en effet pas de phénomène de gélification par rétablissement des liaisons intermoléculaires entre les chaînes d'amidon et la viscosité des solutions refroidies augmente peu avec le temps.

Chacune des deux étapes du procédé a un rôle spécifique : la première, grâce à des moyens d'agitation à la fois simples et efficaces, susceptibles d'être mis en oeuvre à pression atmosphérique, sert à préparer une solution colloïdale partiellement gélatinisée, à haute teneur en matières sèche, exempte de grumeaux ; la deuxième étape mise en oeuvre sous pression et avec des moyens d'agitation qui peuvent être moins efficaces que ceux utilisés dans la première étape, sert à parachever la gélatinisation, c'est-à-dire à obtenir la rupture de l'ensemble des liaisons hydrogène et la dissolution complète des molécules d'amidon.

La présente invention a ainsi pour objet un procédé de cuisson d'une composition amylacée comprenant :
(a) une première étape comprenant le mélange d'au moins une poudre d'amidon avec un fluide aqueux d'amidon contenant de l'amidon granulaire et/ou de l'amidon gélatinisé, la teneur en amidon du fluide aqueux d'amidon et le rapport de mélange de la poudre d'amidon au fluide aqueux d'amidon étant tels que la teneur totale en amidon du mélange obtenu soit supérieure à 45 % en poids, de préférence comprise entre 50 et 82 % en poids, et en particulier comprise entre 52 % et 75 % en poids, ladite première étape étant réalisée à pression atmosphérique, sous agitation, dans une enceinte de cuisson maintenue à une température au moins égale à la température de gélatinisation (TG) la plus élevée de l'ensemble des amidons présents dans le mélange, de préférence à une température supérieure ou égale à 85 °C, pendant un temps suffisant pour obtenir une solution colloïdale d'amidon, et
(b) une deuxième étape comprenant le chauffage de la solution colloïdale d'amidon obtenue à l'étape (a), à une pression supérieure à la pression atmosphérique et à une température comprise entre 120 °C et 180 °C, de préférence comprise entre 140 °C et 180 °C pendant une durée suffisante pour détruire les liaisons hydrogène intermoléculaires et éviter la rétrogradation de la solution d'amidon obtenue après refroidissement.

On entend par « température de gélatinisation » dans la présente demande la température à laquelle un viscosigraphe BRABENDER, réglé pour une montée en température de 1,5 °C par minute, enregistre pour une suspension d'amidon granulaire dans l'eau une différence de viscosité de 20 unités par rapport à la ligne de base.

Par « poudre d'amidon », on entend la matière amylacée à l'état granulaire, c'est-à-dire insoluble dans l'eau. Cette poudre s'écoule librement et est exempte de tout risque d'agglomération (« mottage ») susceptible de nuire à la régularité de sa distribution dans le fluide aqueux.

La poudre d'amidon introduite dans l'enceinte de cuisson de l'étape (a) présente avantageusement un taux d'humidité inférieur à 50 %, de préférence compris entre 3 et 30 %, en particulier compris entre 7 et 22 %.

Le fluide aqueux peut être un « lait d'amidon », c'est-à-dire une suspension d'amidon granulaire insoluble dans l'eau. Lorsqu'il s'agit d'un lait d'amidon, celui-ci a avantageusement une teneur en matière sèche inférieure à 52 %, de préférence comprise entre 20 et 50 %, en particulier compris entre 30 et 45 % en poids.

Le fluide aqueux d'amidon peut également être une solution colloïdale, c'est-à-dire une solution contenant de l'amidon sous forme dissoute. Cette solution a avantageusement une teneur en amidon inférieure à 75 %, de préférence comprise entre 35 et 70 %, et en particulier comprise entre 38 et 65 % en poids.

Dans un mode de réalisation avantageux du procédé de l'invention le fluide aqueux d'amidon est formé par la solution colloïdale d'amidon obtenue en sortie de l'étape (b) et dont une partie est recyclée vers l'étape (a).

La poudre d'amidon et l'amidon dans le fluide aqueux d'amidon, qu'il soit sous forme granulaire ou gélatinisé, sont choisis indépendamment parmi les amidons de tubercules, les amidons de céréales et les amidons de légumineuses.

Ces amidons peuvent être des amidons natifs ou bien des amidons modifiés.

Il peut s'agir, en particulier, d'amidons modifiés chimiquement tels que les amidons oxydés, estérifiés, éthérifiés, réticulés et/ou hydrolysés par tout moyen chimique ou enzymatique, ou encore d'amidons modifiés par des moyens thermomécaniques tels que l'extrusion, ou par des moyens thermiques comme les opérations dites d' « annealing » ou de « Hot Moisture Treatment » (HMT).

De préférence la poudre d'amidon et l'amidon dans le fluide aqueux d'amidon sont de même origine.
La température à laquelle est mise en oeuvre l'étape (a) dans l'enceinte de cuisson est avantageusement supérieure d'au moins 5°C à la température de gélatinisation de l'amidon présentant la température de gélatinisation la plus élevée parmi l'ensemble des amidons présents dans le mélange. Elle est de préférence supérieure d'au moins 10 °C à la température de gélatinisation la plus élevée de l'ensemble des amidons présents dans le mélange. Comme expliqué ci-dessus, la première étape dans l'enceinte de cuisson sert à obtenir une solution colloïdale contenant de l'amidon dont la presque totalité est gélatinisée, c'est-à-dire gonflé par l'eau. Cette solution colloïdale, obtenue en sortie de l'étape (a) peut cependant contenir une fraction relativement faible d'amidon granulaire et d'amidon imparfaitement gélatinisé. La durée de l'étape (a) nécessaire pour obtenir une gélatinisation satisfaisante est bien entendu d'autant plus faible que la température de chauffage est élevée.

Elle est généralement comprise entre 3 minutes et 2 heures, de préférence entre 5 minutes et 1 heure et en particulier entre 10 et 30 minutes.

Le fluide aqueux d'amidon peut en principe être introduit dans l'enceinte de cuisson à température ambiante, mais il est préférable de le préchauffer. Lorsque le fluide aqueux d'amidon est une solution colloïdale d'amidon, il est de préférence chauffé à une température comprise entre 100 °C et 180 °C avant d'être introduit dans l'enceinte de cuisson de l'étape (a).

Selon une variante du procédé de l'invention, on utilise deux fluides aqueux d'amidon, l'un sous forme de lait d'amidon, l'autre sous forme d'une solution colloïdale d'un amidon au moins, tels que définis précédemment.

La deuxième étape du procédé de la présente invention est destinée à parfaire la gélatinisation, à rompre les liaisons hydrogène de l'amidon gélatinisé et à dissoudre l'amidon dans le milieu aqueux, c'est-à-dire à obtenir une dispersion à l'échelle moléculaire des chaînes macromoléculaire afin d'obtenir des compositions amylacées ayant à la fois une teneur en matière sèche élevée et une viscosité modérée, à savoir une viscosité Brookfield, mesurée à 25 °C et à 100 tours/minute, inférieure à 6000 centipoises, de préférence inférieure à 5000 centipoises et en particulier inférieure à 4000 centipoises.

La durée de chauffage de l'étape (b) suffisante pour obtenir de telles solutions d'amidon essentiellement exemptes d'amidon granulaire et présentant les viscosités ci-dessus est généralement comprise entre 15 secondes et 30 minutes, de préférence entre 20 secondes et 15 minutes et en particulier entre 30 secondes et 10 minutes.

Selon un mode de réalisation préféré du procédé selon l'invention le chauffage de l'étape (b) se fait par injection de vapeur d'eau sous pression dans la solution colloïdale d'amidon obtenue en sortie de l'étape (a). La mise en oeuvre d'une telle injection de vapeur sera décrite plus en détail ci-après, à l'aide des figures.

La cuisson de la matière amylacée peut être réalisée en présence d'au moins un additif choisi parmi les additifs couramment utilisés dans les industries concernées.

Il peut ainsi être utile, selon les matières traitées et les objectifs visés, notamment en termes de concentration finale recherchée, d'ajouter dans l'enceinte de cuisson de l'étape (a), un ou plusieurs parmi les ingrédients suivants :
- agents plastifiants choisis, notamment, parmi l'urée, le sorbitol, la glycérine, les sirops de glucose éventuellement hydrogénés, le nitrate de sodium,
- agents stabilisants tels que les stéarates, en particulier le stéarate de magnésium,
- agents d'ajustement et de fixation du pH tels que le carbonate de sodium,
- agents retardateurs de gonflement choisis notamment parmi les phosphates, les sulfate, citrate et chlorure de sodium,
- charges ou pigments, minéraux ou organiques, choisis notamment parmi les kaolins, les carbonates de calcium, précipités ou naturels, les sulfates de calcium, le talc ou les oxydes de titane,
- agents fluidifiant des poudres d'amidon, tels que les silices colloïdales,
- enzymes choisies notamment parmi les α-amylases, les CGTases ou les enzymes dites branchantes,
- agents augmentant la viscosité des solutions colloïdales d'amidon tels que le borax ou le sulfate d'alumine,
- additifs conférant des propriétés particulières au papier, notamment ceux destinés à améliorer les propriétés optiques et mécaniques du papier.

La présente invention a également pour objet des compositions amylacées susceptibles d'être obtenues par le procédé de la présente invention. Ces compositions diffèrent de celles de l'état de la technique par leur teneur importante en matières sèches, supérieure ou égale à 35 % en poids, l'absence d'amidon granulaire, une viscosité d'écoulement modérée et une bonne résistance à la rétrogradation.

Les compositions amylacées de la présente invention ont de préférence une teneur totale en amidon inférieure à 75 %, de préférence comprise entre 35 et 70 %, en particulier comprise entre 38 et 65 % en poids.

Grâce à sa teneur en extraits secs élevée, voire très élevée, le séchage d'un film obtenu à partir de telles compositions est aisé et demande peu d'énergie. Les économies en la matière sont substantielles.

Au surplus, les compositions, présentant un extrait sec supérieur ou égal à 50%, permettent à l'homme de l'art d'envisager le remplacement de solutions ou d'émulsions de polymères synthétiques.

Le procédé selon l'invention peut être mis en oeuvre sur un dispositif de cuisson comprenant :
(a) une enceinte de cuisson équipée
   de moyens propres à assurer l'introduction d'une poudre d'amidon,
   - d'un moyen d'agitation,
   - de moyens d'arrivée d'un fluide aqueux d'amidon comprenant de l'eau, de l'amidon granulaire et/ou de l'amidon gélatinisé, de préférence en un endroit situé au plus proche de ladite alimentation en poudre, et
   - d'un moyen permettant le maintien dans l'enceinte de cuisson d'une température de cuisson au moins égale à 85 °C
(b) un moyen de prélèvement en continu d'une solution colloïdale en sortie de l'enceinte de cuisson, et
(c) des moyens permettant de soumettre la solution colloïdale prélevée en sortie de l'enceinte de cuisson à l'action de vapeur d'eau ayant une température comprise entre 120 °C et 180 °C.

Le dispositif peut comprendre en outre des moyens permettant de régler la vitesse d'introduction de la poudre d'amidon et du fluide aqueux d'amidon granulaire.

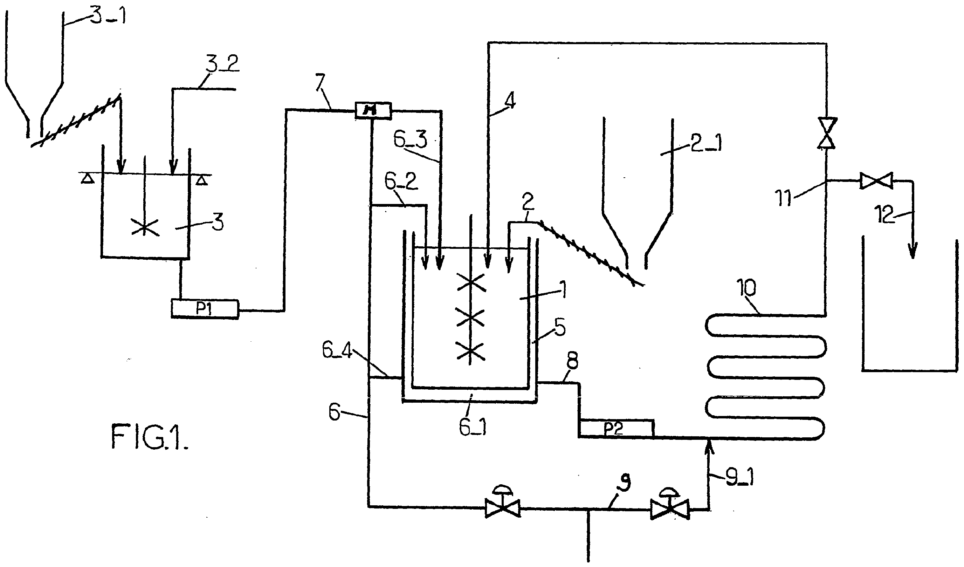

Les caractéristiques et avantages de l'invention apparaîtront clairement à la lecture de la description détaillée qui suit, d'une de ses formes de réalisation et faite en référence aux dessins annexés dans lesquels la figure 1 correspond au schéma général d'un dispositif permettant de mettre en oeuvre le procédé selon l'invention.

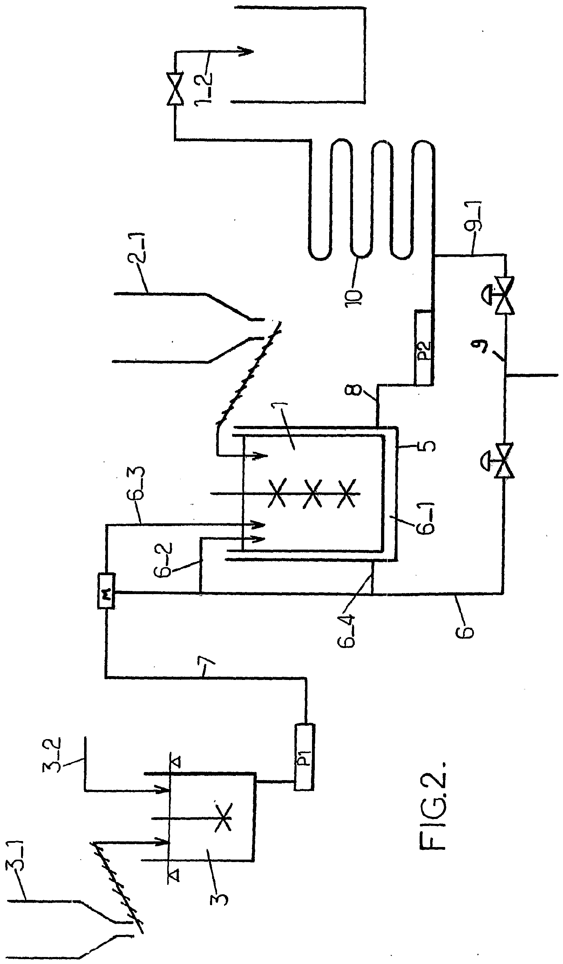

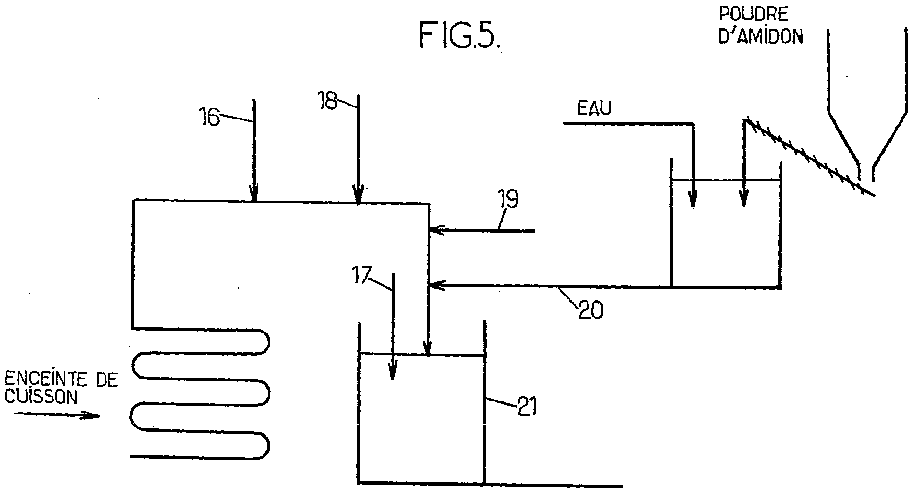

Les figures 2 à 5 présentent des variantes de ce dispositif. Dans ces figures, P représente une pompe, M un mélangeur et H un hydrocyclone.

Un tel dispositif comprend :
- d'une part, une enceinte de cuisson 1 équipée de moyens propres à assurer l'introduction de la poudre d'amidon 2, du fluide aqueux d'amidon granulaire 7, apporté, notamment, par dosage volumétrique continu, préféré pour son moindre coût ou, par pesée continue au moyen d'une vis sur peson, et/ou du fluide aqueux qui est une solution colloïdale d'amidon 4, et
- d'autre part, des moyens propres à assurer l'apport thermique nécessaire, notamment sous forme de vapeur d'eau proposée sous pression, à une température généralement comprise entre 120 et 180°C.

Pour chauffer l'enceinte 1 dans laquelle est mise en oeuvre la première étape de cuisson, il est possible d'installer une cuve 5 qui est à double paroi, espace (6-1) dans lequel on fait circuler de la vapeur d'eau, de préférence, à une température comprise entre 120 et 180°C, de préférence au moins égale à 140°C, en particulier au moins égale à 150°C ou éventuellement, une huile chaude.

Un autre moyen avantageux consiste en une introduction d'eau préalablement chauffée dans un échangeur eau/vapeur ou par injection directe de vapeur dans l'enceinte de cuisson, notamment à pression atmosphérique (6-2), ce choix pouvant présenter l'intérêt supplémentaire et non négligeable de la participation de l'eau chaude, liquide ou vapeur à la dispersion de l'amidon en poudre.

Cette variante peut permettre encore d'éviter l'apport de vapeur à la base de l'enceinte (6-4) et par là, de supprimer les risques de vibrations induites ou d'encrassement de la couronne de distribution de vapeur.

La vapeur utile au chauffage par injection directe peut aussi être amenée et mélangée dans le fluide porteur lait d'amidon granulaire 7, ladite vapeur l'amenant, dans le cas présent, à l'état de solution colloïdale en (6-3).

Ces divers moyens correspondent à autant de possibilités offertes par le dispositif. Ils peuvent aussi être conjugués.

L'apport calorique, par double paroi et/ou par injection de vapeur, assure le maintien, dans l'enceinte, de la température nécessaire à la cuisson de l'ensemble de l'amidon, celle-ci étant ainsi au moins égale à la température de gélatinisation de l'amidon présentant la température de gélatinisation la plus élevée.

Le lait d'amidon granulaire est obtenu dans une cuve de préparation 3, laquelle est alimentée en poudre d'amidon granulaire par le réservoir (3-1) et par une canalisation d'eau (3-2).

L'amidon granulaire est apporté en poudre à partir du réservoir (2-1), grâce au distributeur 2, jusqu'à l'enceinte de cuisson 1. Le temps de séjour de l'amidon granulaire dans ladite enceinte 1 est celui nécessaire à la mise en solution souhaitée. Il dépend du volume de l'enceinte, des différents débits d'alimentation, notamment de celui de l'amidon et des fluides porteurs, et, bien entendu, de la vitesse de pompage à la sortie.

La solution colloïdale d'amidon est prélevée en continu à la sortie, généralement à la base de l'enceinte, en 8. Elle est alors dirigée vers une section de traitement thermique, suffisamment isolée et permettant de soumettre la solution colloïdale, en (9-1), à une injection de vapeur vive 9.

La section de traitement thermique est de façon particulièrement avantageuse, une tuyauterie en forme de serpentin 10, à l'intérieur de laquelle la solution colloïdale est soumise à l'action de vapeur d'eau dont la température est comprise entre 120 et 180°.

A l'injection de vapeur, et juste après elle, peut être associée une pompe à haute vitesse de cisaillement. Elle apporte le double avantage d'un cisaillement important et de l'obtention plus aisée d'une pression suffisante dans le serpentin.

Le serpentin 10 et le dispositif d'injection (9-1) peuvent revêtir toute autre forme géométrique, dès lors que l'effet thermique et mécanique de la vapeur est assuré.

L'apport calorique réalisé au niveau de ce dispositif, peut être effectué par tout moyen adapté, par exemple par un bain d'huile.

Entre la base de l'enceinte 8 et le point d'injection de vapeur vive 9, il peut être utile d'installer des moyens mécaniques complémentaires tels que, par exemple, des équipements de type « GYROFLUX » commercialisés par la société « VMI/Rayneri », pompe à haut taux de cisaillement et/ou de type « à rotor et contre-rotor ».

Ces matériels sont destinés à parfaire, par l'action mécanique intense, les états de cuisson et/ou les comportements rhéologiques et, notamment, à diminuer la viscosité de la solution colloïdale, sans modification sensible, et globale, de la masse moléculaire de l'amidon.

A la sortie du serpentin, un dispositif de type vanne à trois voies 11 permet de séparer deux flux, le premier dirigé vers l'utilisation sur machine 12, l'autre étant destiné à être recyclé et à constituer un fluide porteur se présentant sous la forme de solution colloïdale 4.

Ce flux recyclé peut être soumis à l'action d'une pompe à haut taux de cisaillement, d'un système de type « GYROFLUX » et/ou d'un matériel de type « à rotor et contre rotor ».

Selon une première variante, représentée aussi à la figure 1, l'appoint de vapeur 6, destiné à l'enceinte de cuisson 1, peut être amené, partiellement ou totalement, par le bas de la cuve 5, en (6-4), notamment par l'intermédiaire d'une couronne distributrice.

A la figure 2 est représentée une variante d'un dispositif utilisant en tant que fluides aqueux d'amidon uniquement des laits d'amidon granulaire. La totalité de la solution colloïdale produite en sortie de l'étape (b) est orientée vers l'exploitation directe.

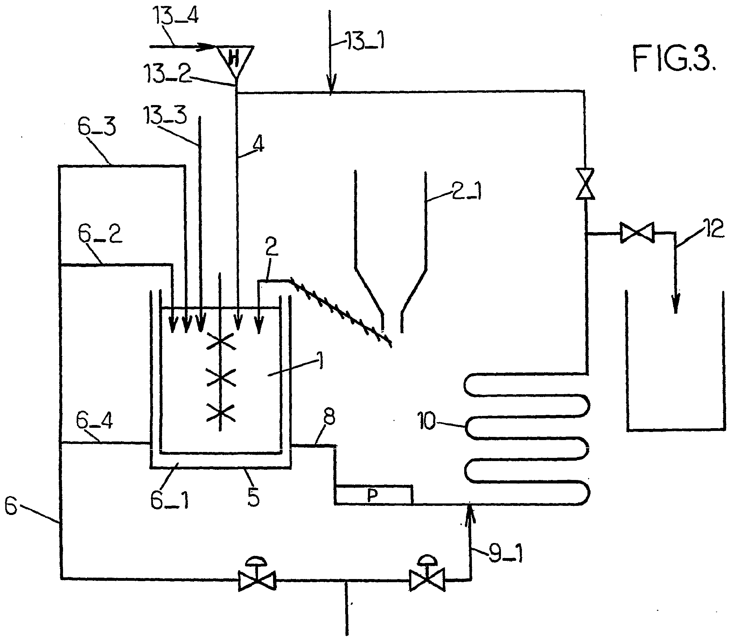

A l'inverse, le dispositif représenté à la figure 3 fonctionne sans apport de lait d'amidon granulaire et utilise uniquement une solution colloïdale recyclée à partir de l'étape (b). Le circuit trouve alors un fonctionnement satisfaisant dans un partage judicieux de la solution colloïdale produite entre exploitation directe et recyclage partiel vers l'enceinte de cuisson. L'équilibre peut être atteint, notamment, grâce à un apport, même limité, de vapeur par la canalisation 6, que ce soit en (6-1), (6-2), (6-3) et/ou (6-4), et ce, même dans le cas d'arrêt de l'exploitation.

Toutefois, dans la plupart des cas correspondant à de tels schémas, un apport d'eau dans le circuit est alors nécessaire. La dilution souhaitée peut alors être obtenue par introduction d'eau dans le recyclage partiel de la colle (13-1 - figure 3), par mélange de la solution colloïdale et d'eau (13-4 - figure 3) au niveau d'un hydrocyclone (13-2 - figure 3) et/ou par ajout d'eau dans l'enceinte de cuisson elle-même (13-3 - figure 3).

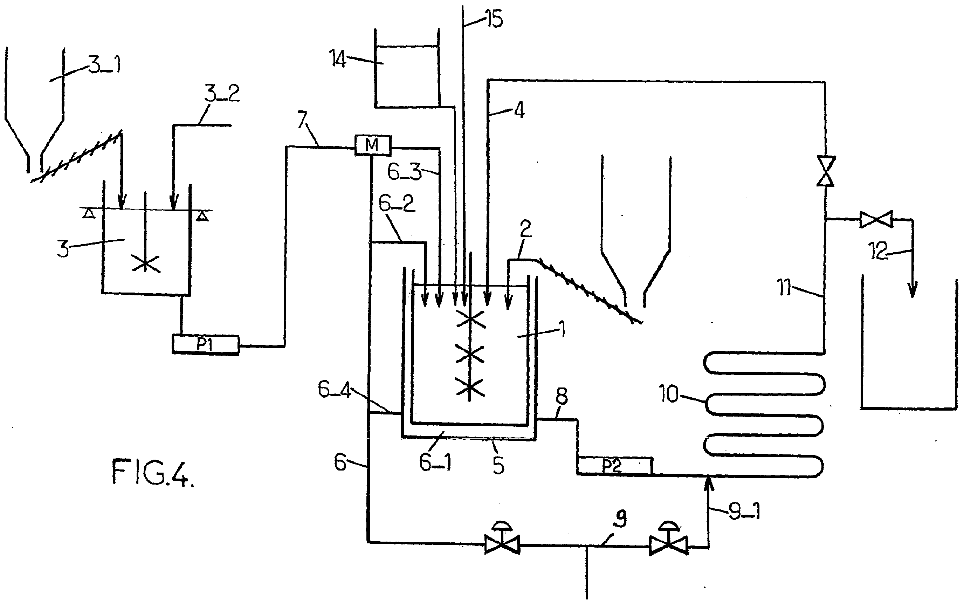

Le dispositif représenté à la figure 4, prévoit l'ajout d'un ou de plusieurs ingrédients complémentaires, sous forme liquide (position 14 - figure 4) ou sous forme de poudre (position 15 - figure 4).

Les différents additifs utiles peuvent être introduits à toute étape du procédé selon l'invention, c'est-à-dire en tout endroit, adapté et utile à l'addition, du dispositif selon l'invention.

On choisira, par exemple, l'introduction dans l'un ou l'autre des fluides porteurs, dans l'enceinte de cuisson elle-même, dans la tuyauterie d'envoi de la colle vers un réservoir de stockage et/ou dans le réservoir de stockage.

La présente invention a également pour objet l'utilisation des compositions amylacées à haute teneur en matières sèches.

En effet, les propriétés rhéologiques particulièrement intéressantes des compositions selon l'invention permettent de les utiliser pour la formulation de sauces de couchage ou pour la formulation de compositions adhésives utiles à des collages très variés tels que le collage de sacs, de tubes spiralés, ou à l'étiquetage de bouteilles.

La dilution de telles compositions n'est pas toujours souhaitée ou recherchée. Pourtant, tenant compte de leurs caractéristiques particulières, elles peuvent l'être avec intérêt, notamment pour des opérations d'ennoblissement du papier, des panneaux cellulosiques, de matières textiles, y compris les fibres ou les panneaux minéraux, de cuirs.

Lesdites compositions peuvent encore trouver usage pour des formulations particulières intéressant l'industrie des matériaux de construction et l'industrie pétrolière.

Leurs caractéristiques étonnantes permettent de les utiliser dans des opérations intéressant l'industrie pharmaceutique, l'industrie cosmétique ou l'industrie agro-alimentaire comme, par exemple, l'encapsulation ou l'enrobage (« coating »).

Elles peuvent encore être utiles à l'élaboration de compositions destinées au collage, en particulier, de sacs et de fûts ou encore, d'assemblage de toute structure complexe, notamment cellulosique.

Elles peuvent notamment être utiles au collage de cartons ondulés, notamment dans le cadre de collages réalisés avec un faible apport calorique sur machine (collages dits « à froid »).

Elles participent plus couramment, en tant que partie primaire, à l'élaboration de compositions dites à deux composants, utilisées en particulier dans le cadre de procédés connus sous les noms de procédés « Stein-Hall » ou « Minocar », pour le collage de cartons ondulés de tous types, c'est-à-dire de cartons dits simple face (SF), double face (DF), double-double (DD), triple ou multi-cannelures, comportant des micro-cannelures ou non.

Les différents aspects de la présente invention, relatifs au procédé et au dispositif, ainsi que les caractéristiques des diverses compositions adhésives accessibles selon ces moyens, vont être décrits de façon plus détaillée à l'aide des exemples qui suivent, qui ne sont aucunement limitatifs.

### Exemple 1 :

On donne au dispositif la configuration de la figure 3. Le démarrage de l'installation prévoit une arrivée d'amidon en poudre au point 2, sous la forme d'une dextrine de maïs, à raison de 100 kg/h. Parallèlement, le débit de l'eau (points 11, 12 et/ou 13) est de 100 l/h.

La quantité de vapeur, fournie à 150°C (6), est distribuée par le fond de l'enceinte de cuisson (6-4). Elle permet de parvenir à une température de 90°C et d'assurer ladite température pendant la phase de démarrage.

La même qualité de vapeur, à 150°C, est apportée, par le point 8, à la suspension colloïdale (colle) obtenue par réglage d'un temps moyen de séjour de 15 minutes dans l'enceinte de cuisson.

La solution résultante traverse le serpentin en 4 minutes, en bénéficiant d'une contre-pression réglée à environ 5 bars et correspondant à une température interne de 150°C approximativement.

On assure ensuite différentes conditions de recyclage au point 10, de façon à ce que, respectivement, 10, 20 et 40 litres de solution soient recyclés et assurent, par le point 4, le rôle de fluide porteur vis-à-vis de la poudre de dextrine.

On remarque que, dans le cadre d'une régulation adaptée, l'apport de vapeur au point 6 décroît en fonction du taux de recyclage, jusqu'à devenir faible à très faible.

### Exemple 2 :

Ce cas, illustré par la figure 2, correspond à un dispositif ne prévoyant pas de recyclage de la colle. On procède à la préparation continue d'un lait de la dextrine de maïs de l'exemple 1, obtenu à partir de débits en amidon de 473,8 kg/h et en eau de 710,6 kg/h. Le lait, à 20°C et 40%, présentant une densité de 1,184, reçoit un flux de 110,5 kg/h de vapeur (configuration 6-3) à 150, 4°C sous une pression de 5,4 bars. La colle est ainsi produite à raison de 1294,9 kg/h, à une matière sèche de 36,59% de matières sèches (821,1 kg/h d'eau + 473,8 kg/h d'amidon).

D'un autre côté, on amène un amidon en poudre, présentant une humidité de 10%, à un débit de 920,1 kg/h (828 kg/h d'amidon sec + 92 kg/h d'eau).

Sont définis, à partir de ces conditions, des ratios poudre/colle de 71,05% et poudre/(colle+poudre) de 41,54%.

L'enceinte de cuisson reçoit ainsi, sous forme de colle ou de poudre, 913,1 kg/h d'eau et 1301,8 kg/h d'amidon, c'est-à-dire 2215 kg/h de colle à 58,77% de matières sèches, à une température de 57,5°C environ.

La température, dans l'enceinte de cuisson est maintenue à 90°C.

La colle produite alimente le serpentin en recevant 241,25 kg/h de vapeur à 150,4°C et 5,4 bars.

La colle finale est débitée à 2456 kg/h environ (1154,4 kg/h d'eau + 1301,8 kg/h d'amidon), soit à 53%MS.

### Exemple 3 :

Le cas exposé dans cet exemple, est illustré par la figure 1. Il correspond à un dispositif prévoyant, cette fois, le recyclage de la colle venant s'ajouter à un fluide porteur sous forme de colle issue de la préparation d'un lait d'amidon.

Les débits de lait d'amidon, et de colle qui en résulte (configuration 6-3), sont ceux de l'exemple 2.

Par contre, la colle produite à la sortie du serpentin n'est plus dirigée en totalité vers la machine. Une partie importante (1500 kg/h) en est distraite et recyclée, de façon à constituer un fluide porteur pour la cuisson envisagée. Cette manoeuvre permet une augmentation sensible du débit d'amidon en poudre. Elle est en effet portée à 1559,2 kg/h (1403,3 kg/h d'amidon sec + 155,9 kg/h d'eau).

Les régimes établis en sont profondément modifiés. En effet, l'enceinte de cuisson reçoit un mélange à 63,09%MS à un débit global de 4354,15 kg/h (1607,1 kg/h d'eau +2747,05 kg/h d'amidon), à une température de 73°C. La température à l'intérieur de l'enceinte est de 90°C.

Les ratios poudre/colles et poudre/(colles+poudre) sont respectivement de 55,79% et 35,81%.

Ensuite, la colle est dirigée vers le serpentin en recevant, en 9, 382,1 kg/h de vapeur (150,4°C-5,4 bars.

A la sortie du serpentin, le débit est de 4736,3 kg/h de colle (1989,25 kg/h d'eau pour 2747,05 kg/h d'amidon) présentant une concentration de 58%, soit sensiblement supérieure à celle de l'exemple 2. Comme indiqué, 1500 kg/h sont recyclés et 3236,3 kg/h sont envoyés sur la machine. Les ratios recyclage/envoi et recyclage/colle totale sont ainsi, respectivement, de 46,35% et de 31,67% environ.

### Exemple 4 :

Les conditions de travail sont celles de l'exemple 3, à la différence près que l'on cherche, d'abord, à atteindre la concentration la plus élevée. On a ainsi déterminé que l'alimentation de la poudre d'amidon, sans modification des apports de lait, de vapeur et de colle recyclée, pouvait être portée à 1950 kg/h environ.

A l'opposé, les conditions de travail voisines du seuil d'intérêt ont été approximativement déterminées.

Il est, par suite, possible de dresser, entre ces différents profils, le tableau comparatif suivant :

| | Conditions basses | Conditions moyennes | Conditions optimales |
|---|---|---|---|
| Slurry à 40% (kg/h) | 1184,4 | 1184,4 | 1184,4 |
| Eau (kg/h) | 710,6 | 710,6 | 710,6 |
| Amidon (kg/h) | 473,8 | 473,8 | 473,8 |
| densité | 1,184 | 1,184 | 1,184 |
| Colle(kg/h)(configuration6-3) | 1295 | 1295 | 1295 |
| Eau (kg/h) | 821,2 | 821,2 | 821,2 |
| Amidon (kg/h) | 473,8 | 473,8 | 473,8 |
| concentration | 36,59% | 36,59% | 36,59% |
| Amidon poudre (kg/h) | 1351,6 | 1559,2 | 1950,4 |
| Eau (kg/h) | 135,2 | 155,9 | 195 |
| Amidon sec (kg/h) | 1216,4 | 1403,3 | 1755,4 |
| Alimentation enceinte (kg/h) | 4146,5 | 4354,1 | 4745,4 |
| Eau (kg/h) | | | |
| Amidon sec (kg/h) | 1661,3 | 1607,1 | 1605,7 |
| Concentration | 2485,2 | 2747 | 3139,7 |
| température | 59,94% 37,9°C | 63,09% 73°C | 66,16% 69,3°C |
| Ratio poudre/colle | 48,36% | 55,79% | 69,79% |
| Ratio poudre/ total | 32,60% | 35,81% | 41,10% |
| Vapeur entrée serpentin (kg/h) | 542,5 | 382,1 | 427 |
| Sortie serpentin (kg/h) | 4689 | 4736,3 | 5172,5 |
| Eau (kg/h) | 2203,8 | 1989,25 | 2032,8 |
| Amidon sec (kg/h) | 2485,2 | 2747,05 | 3139,7 |
| Concentration | 53% | 58% | 60,70% |
| recyclage | 1500 | 1500 | 1500 |
| Sortie machine | 3189 | 3236,3 | 3672,5 |
| Ratio recyclage/machine | 47,04% | 46,35% | 40,84% |
| Ratio recyclage/total | 31,99% | 31,67% | 29,00% |

Pour un débit utile, destiné à la machine, ne variant que dans des proportions assez faibles (de 3200 à 3700 kg/h environ), la concentration de la colle évolue, dans une gamme particulièrement intéressante, entre 53 et 60,7%.

L'intérêt de concentrations appartenant à cet intervalle est plus particulièrement appréciable dans le domaine de l'ennoblissement du papier, notamment quand il s'agit de modifier les ratios latex/amidon, voire de supprimer le latex. Pour le collage du carton ondulé, le départ de l'eau demande une dépense énergétique faible.

### Exemple 5 :

Cet exemple concerne la possibilité de réduction sensible de la quantité de lait. On vérifie, dans ce cas, la faisabilité d'une opération visant à dépasser 50%MS.

Dans un second temps, on définit les conditions permettant d'atteindre un objectif moyen.

Dans un troisième temps, on recherche les conditions optimales, conduisant aux matières sèches les plus élevées.

| | Conditions basses | Conditions moyennes | Conditions optimales |
|---|---|---|---|
| Amidon poudre (kg/h) | 161,9 | 324,2 | 985,8 |
| Eau (kg/h) | 16,2 | 32,4 | 98,6 |
| Amidon sec (kg/h) | 145,7 | 291,8 | 887,2 |
| Alimentation enceinte (kg/h) | 1661,9 | 1824,2 | 2485,8 |
| Eau (kg/h) | 721,2 | 557,4 | 473,6 |
| Amidon sec (kg/h) | 940,7 | 1266,8 | 2012,2 |
| Concentration | 56,6% | 69,45% | 80,85% |
| température | 93°C | 87,2 | 70°C |
| Ratio poudre/colle | 10,79% | 21,61% | 65,72% |
| Ratio poudre/ total | 9,74% | 17,77% | 39,66% |
| Vapeur entrée serpentin(kg/h) | 113 | 124,7 | 197,2 |
| Sortie serpentin (kg/h) | 1774,9 | 1948,9 | 2683 |
| Eau (kg/h) | 834,2 | 682,1 | 670,75 |
| Amidon sec (kg/h) | 940,7 | 1266,8 | 2012,25 |
| Concentration | 53% | 65% | 75% |
| recyclage | 1500 | 1500 | 1500 |
| Sortie machine | 274, 9 | 448,9 | 1183 |
| Ratio recyclage/machine | 545,7% | 334% | 126,8% |
| Ratio recyclage/total | 84,5% | 77% | 55,9% |

Dans les trois cas envisagés, il est possible d'atteindre rapidement une situation d'équilibre.

La gamme de concentrations possibles est encore plus large. On peut atteindre 75%MS.

### Exemple 6 :

Cet exemple permet de considérer le cas particulier d'un fonctionnement discontinu utile, notamment, en période d'essais ou sur des machines présentant de faibles capacités. L'objectif intègre la production d'une quantité limitée de colle de dextrine de maïs à 50%MS.

L'équipement est, dans cette investigation, réduit à une cuve verticale munie d'un agitateur puissant, par exemple, équipé d'une turbine Rayneri et suivie d'une pompe qui alimente un cuiseur tubulaire sous pression (« Jet Cooker »). La séquence discontinue est la suivante :
- 59 litres d'eau dans une cuve verticale d'une capacité suffisante,
- apport de 2 sacs de 25 kg de dextrine de maïs, pour la confection d'un lait à 41,4%MS,
- cuisson à 90°C pendant 10 minutes sous vive agitation.

Cette première préparation, sous la forme d'une solution colloïdale, constitue le fluide porteur.

Dans une seconde étape, 3 sacs de 25 kg de la même dextrine de maïs y sont ajoutés. L'ensemble présente une matière sèche égale à 56%. Il est porté à 90°C pendant 10 minutes. Il est soumis ensuite à l'action complémentaire de cuisson, dans le Jet-Cooker, à 150°C pendant 3 minutes.

La colle, produite à 50,6%MS, est amenée à une cuve calorifugée, d'une capacité minimale de 300 litres.

### Exemple 7 :

Un essai de cuisson est mené à partir d'une dextrine de maïs sur un dispositif conforme au principe établi sur la figure 2, avec la configuration (6-2), prévoyant l'introduction conjointe, dans l'enceinte de cuisson, d'une poudre de dextrine, d'une part, et d'autre part, d'un lait à 40% de matières sèches (%MS), préparé à partir de la même dextrine.

La température maintenue dans l'enceinte est de 90°C.

La température dans le serpentin est affichée à 150°C.

L'objet de cet essai est de conduire l'investigation relative à une concentration modeste et d'apprécier le résultat en termes rhéologiques. Dans ce but, le ratio lait/poudre est d'abord défini afin d'obtenir une colle à 38%MS. Puis il est modifié progressivement pour augmenter la concentration jusqu'à ce qu'elle soit supérieure à 50%.

Dans une première phase, sur un appareillage de capacité moyenne, on atteint 50% de matières sèches.

Dans une seconde étape, sur une installation industrielle, on parvient à atteindre 53,5%.

Les deux colles font l'objet d'appréciations rhéologiques durant une étape de refroidissement, selon les principes maintenant établis et répandus de détermination des modules viscoélastiques G' et G" permettant de déterminer la transformation sol/gel.

Ces mesures sont effectuées à l'aide d'un rhéomètre dynamique AR2000, en utilisant des cylindres coaxiaux 14/15mm. La rampe de refroidissement linéaire est comprise entre 80 et 5°C, à raison de 1°C/minute. La contrainte de sollicitation sinusoïdale varie en fonction de la réponse de l'échantillon testé. La fréquence est fixée à 1 Hertz.

L'observation essentielle, que ce soit sur colle obtenue en pilote ou sur celle obtenue sur équipement industriel, réside en l'absence de phase de transformation sol/gel, ce fait traduisant une stabilité des colles, au refroidissement, tout à fait remarquable.

De façon particulièrement surprenante et inattendue, ces colles, lorsqu'elles sont diluées à 35% et même, à 25%MS, conserve cette caractéristique étonnante.

Par opposition, des colles obtenues aux matières sèches évoquées de 35 et 25%MS, selon des moyens conventionnels de cuisson, qu'ils soient continus ou discontinus, sous pression ou en cuve ouverte, présentent une phase de transformation sol/gel, révélant l'existence d'un phénomène de rétrogradation. Par exemple, une colle de la même dextrine de maïs, préparée à 25%MS par cuisson à la vapeur vive, présente une transformation sol/gel vers 61°C, température à laquelle le début de rétrogradation se produit.

En outre, le niveau des modules viscoélastiques est, selon l'invention, nettement inférieur à celui présenté selon l'art antérieur, parallèlement à une viscosité apparente, mesurée au viscosimètre Brookfield, par exemple, très sensiblement plus élevée.

C'est ainsi que, de manière plus précise, la colle de dextrine préparée selon l'invention, sur un dispositif industriel, à 53,5%MS, présente au refroidissement, les viscosités, mesurées au viscosimètre Brookfield à 100 tours/minute (en mPa.s), suivantes :

| | Sur colle fraîche | Après 24 heures à 70°C |
|---|---|---|
| 80°C | 1150 | |
| 70°C | 1724 | 2690 |
| 60°C | 2780 | 3080 |
| 50°C | 4480 | 4170 |
| 40°C | 6860 | 6490 |
| 30°C | 15000 | 16200 |

On peut remarquer que ces colles restent aptes à un écoulement satisfaisant aux températures de mise en oeuvre, notamment relatives aux domaines de l'ennoblissement du papier tels que surfaçages ou couchages, c'est-à-dire à des températures généralement comprises entre 50 et 70°C.

L'absence de manifestations de rétrogradation est en outre accompagnée d'une stabilité remarquable dans le temps, en particulier, aux basses températures.

Il est ainsi établi que les compositions selon l'invention présentent des caractéristiques uniques aux concentrations concernées.

Pour tout homme de l'art, ces résultats ne peuvent pas être atteints par des moyens conventionnels, ne serait-ce que par l'impossibilité, due notamment à des phénomènes de dilatance, de préparer des laits d'amidon à des extraits secs suffisamment élevés pour espérer atteindre les concentrations finales visées.

En outre, les données rhéologiques des colles obtenues par les moyens conventionnels à 35%MS, par exemple, sont telles que les viscosités prévisibles à hautes concentrations seraient si élevées qu'elles en seraient, dans les mêmes conditions de mesure, non mesurables, exprimant ainsi l'impossibilité absolue de l'exploitation des colles.

Exemple 8 : Les conditions de travail sont similaires à celles de l'exemple 7, avec un dispositif selon la figure 2 et la configuration 6-2, à la différence, essentielle, que le protocole ne s'applique pas à la seule cuisson de la dextrine de maïs mais à une opération de solubilisation et d'hydrolyse enzymatique d'un amidon de maïs natif. Dans ce cas, l'enceinte de solubilisation et hydrolyse enzymatique est maintenue à 85°C.

La température dans le serpentin, devenu inhibiteur de l'activité enzymatique, est encore fixée à 150°C.

Comme dans l'exemple 7, le ratio lait/poudre est fixé de façon à ce que la matière sèche de la colle liquéfiée obtenue soit de 38% dans une première phase. Le ratio est ensuite modifié pour que la matière sèche augmente progressivement jusqu'à dépasser 50%.

Si le cadre d'exploitation est différent, les observations faites, dans le cas présent, sur une colle à 52%MS, sont tout à fait parallèles. Comme dans l'exemple 7, on constate, à l'utilisation du rhéomètre dynamique AR2000 et des cylindres coaxiaux, dans les conditions précédemment définies de la rampe de refroidissement, l'absence de transformation sol/gel et, par conséquent, l'absence d'un quelconque phénomène de rétrogradation dans la plage des températures considérées.

On effectue encore, dans des conditions comparables à celles de l'exemple 7, des mesures de viscosités au refroidissement (en mPa.s, à 100 tours/minute) :

| | Sur colle fraîche | Après 24 heures à 70°C |
|---|---|---|
| 80°C | 840 | |
| 70°C | 952 | 1244 |
| 60°C | 1228 | 1340 |
| 50°C | 1504 | 1624 |
| 40°C | 2160 | 2304 |
| 30°C | 3020 | 2868 |

Il est possible de reprendre en tous ses points, la conclusion portée dans l'exemple 6, que ce soit en termes d'absence de transformation sol/gel sur rhéomètre AR2000, que ce soit sous forme concentrée, voisine ou supérieure à 50% ou diluée à 35%, voire 25%, d'aptitude à l'écoulement aux températures de mise en oeuvre, notamment pour le surfaçage ou le couchage, d'absence de manifestations de rétrogradation et de stabilité dans le temps, en particulier, aux basses températures.

Les caractéristiques rhéologiques aux concentrations concernées sont incomparables, étant notamment entendu que des colles présentant de tels extraits secs ne peuvent pas être préparées par des moyens conventionnels. Les viscosités en seraient beaucoup trop élevées et, en conséquence, non mesurables et non exploitables.

## Revendications

1. Procédé de cuisson d'une composition amylacée comprenant : (a) une première étape comprenant le mélange d'au moins une poudre d'amidon avec un fluide aqueux d'amidon contenant de l'amidon granulaire et/ou de l'amidon gélatinisé, la teneur en amidon du fluide aqueux d'amidon et le rapport de mélange de la poudre d' amidon au fluide aqueux d'amidon étant tels que la teneur totale en amidon du mélange obtenu soit supérieure à 45 % en poids, de préférence comprise entre 50 et 82 % en poids, et en particulier comprise entre 52 % et 75 % en poids, ladite première étape étant réalisée à pression atmosphérique, sous agitation, dans une enceinte de cuisson maintenue à une température au moins égale à la température de gélatinisation (TG) la plus élevée de l'ensemble des amidons présents dans le mélange, pendant une durée comprise entre 3 minutes et 2 heures, et (b) une deuxième étape comprenant le chauffage de la solution colloïdale d'amidon obtenue à l'étape (a), à une pression supérieure à la pression atmosphérique et à une température comprise entre 120°C et 180°C, de préférence comprise entre 140°C et 180°C pendant une durée comprise entre 15 secondes et 30 minutes.

2. Procédé selon la revendication 1, **caractérisé en ce que** la première étape (étape (a)) est réalisée à une température supérieure d'au moins 5°C, de préférence supérieure d'au moins 10°C, à la température de gélatinisation la plus élevée de l'ensemble des amidons présents dans le mélange.

3. Procédé selon la revendication 1 ou 2, **caractérisé par le fait que** la durée de la première étape est comprise entre 3 minutes et 2 heures, de préférence entre 5 minutes et 1 heure et en particulier entre 10 et 30 minutes.

4. Procédé selon l'une quelconque des revendications précédentes, **caractérisé par le fait que** la durée de chauffage de l'étape (b) est suffisante pour obtenir des solutions d'amidon essentiellement exemptes d'amidon granulaire.

5. Procédé selon l'une quelconque des revendications précédentes, **caractérisé par le fait que** la durée de chauffage de l'étape (b) est suffisante pour obtenir des solutions d'amidon ayant une viscosité Brookfield, mesurée à 25 °C, inférieure à 6000 centipoises, de préférence inférieure à 5000 centipoises et en particulier inférieure à 4000 centipoises.

6. Procédé selon l'une quelconque des revendications précédentes, **caractérisé en ce que** la durée de chauffage de l'étape (b) est comprise entre 15 secondes et 30 minutes, de préférence entre 20 secondes et 15 minutes et en particulier entre 30 secondes et 10 minutes.

7. Procédé selon l'une quelconque des revendications précédentes, **caractérisé par le fait que** le chauffage de l'étape (b) se fait par injection de vapeur d'eau sous pression dans la solution colloïdale d'amidon obtenue en sortie de l'étape (a).

8. Procédé selon l'une quelconque des revendications précédentes, **caractérisé en ce que** le fluide aqueux d'amidon, avant d'être introduit dans l'enceinte de cuisson de l'étape (a), est chauffé à une température comprise entre 100°C et 180°C.

9. Procédé selon l'une quelconque des revendications précédentes, **caractérisé en ce que** la poudre d'amidon introduite dans l'enceinte de cuisson de l'étape (a) présente un taux d'humidité inférieur à 50 %, de préférence compris entre 3 et 30 %, en particulier compris entre 7 et 22 %.

10. Procédé selon l'une quelconque des revendications précédentes, **caractérisé en ce que** le fluide aqueux d'amidon est un lait d'amidon ayant une teneur en matière sèche inférieure à 52 %, de préférence comprise entre 20 et 50 %, en particulier compris entre 30 et 45 % en poids.

11. Procédé selon l'une quelconque des revendications 1 à 8, **caractérisé en ce que** le fluide aqueux d'amidon est une solution colloïdale d'amidon ayant une teneur en amidon inférieure à 75 %, de préférence comprise entre 35 et 70 %, et en particulier comprise entre 38 et 65 % en poids.

12. Procédé selon l'une quelconque des revendications précédentes, **caractérisé par le fait que** la poudre d'amidon et l'amidon dans le fluide aqueux d'amidon sont choisis indépendamment parmi les amidons de tubercules, les amidons de céréales et les amidons de légumineuses, éventuellement modifiés.

13. Procédé selon l'une quelconque des revendications précédentes, **caractérisé en ce que** la poudre d'amidon et l'amidon dans le fluide aqueux d'amidon sont de même origine.

14. Procédé selon l'une quelconque des revendications précédentes, **caractérisé par le fait qu'**une partie de la solution d'amidon obtenue en sortie de l'étape (b) est recyclée vers l'étape (a) pour servir de fluide aqueux d'amidon.

15. Composition d'amidon susceptible d'être obtenue selon le procédé selon l'une quelconque des revendications 1 à 14.

16. Composition d'amidon selon la revendication 15, **caractérisée par le fait qu'**elle a une teneur totale en amidon inférieure à 75 %, de préférence comprise entre 35 et 70 %, en particulier comprise entre 38 et 65 % en poids.

17. Composition d'amidon selon la revendication 15 ou 16, **caractérisée par le fait qu'**elle présente une viscosité Brookfield, mesurée à 25°C, inférieure à 6000 centipoises, de préférence inférieure à 5000 centipoises et en particulier inférieure à 4000 centipoises.

18. Composition d'amidon selon l'une quelconque des revendications 15 à 17, **caractérisée par le fait qu'**elle est essentiellement exempte d'amidon granulaire.

19. Utilisation d'une composition selon l'une quelconque des revendications 15 à 18, pour l'ennoblissement de matériaux cellulosiques, de préférence de papier et de cartons plats, de préférence pour le surfaçage, le surfaçage pigmenté et le couchage desdits matériaux.

20. Utilisation d'une composition selon l'une quelconque des revendications 15 à 18 pour le collage, en particulier pour le collage de matériaux cellulosiques, de préférence de cartons ondulés.

## Patentansprüche

1. Verfahren zum Kochen einer stärkehaltigen Zusammensetzung, umfassend: (a) einen ersten Schritt, der die Mischung wenigstens eines Stärkepulvers mit einer wässrigen Stärkeflüssigkeit umfasst, welche körnige Stärke und/oder gelatinisierte Stärke aufweist, wobei der Stärkegehalt der wässrigen Stärkeflüssigkeit und das Verhältnis der Mischung von Stärkepulver und wässriger Stärkeflüssigkeit derart sind, dass der Gesamtgehalt an Stärke der erhaltenen Mischung größer als 45 Gewichtsprozent ist, vorzugsweise zwischen 50 und 82 Gewichtsprozent, und insbesondere zwischen 52 und 75 Gewichtsprozent, wobei der erste Schritt bei atmosphärischem Druck unter Rühren in einem Kochgefäß durchgeführt wird, das während einer Dauer von zwischen 3 Minuten und 2 Stunden auf einer Temperatur gehalten wird, die wenigstens der höchsten Gelatinisierungstemperatur (TG) aller in der Mischung vorhanden Stärken entspricht, und (b) einen zweiten Schritt, der das Erwärmen der in Schritt (a) erhaltenen Kolloid-Stärkelösung bei einem Druck, der größer ist als der atmosphärische Druck und bei einer Temperatur zwischen 120 und 180 °C, vorzugsweise zwischen 140 und 180 °C während einer Dauer von zwischen 15 Sekunden und 30 Minuten umfasst.

2. Verfahren nach Anspruch 1, **dadurch gekennzeichnet, dass** der erste Schritt (Schritt (a)) bei einer Temperatur durchgeführt wird, die wenigstens 5 °C, vorzugsweise wenigstens 10 °C höher ist als die höchste Gelatinisierungstemperatur aller in der Mischung vorhanden Stärken.

3. Verfahren nach Anspruch 1 oder 2, **dadurch gekennzeichnet, dass** die Dauer des ersten Schrittes zwischen 3 Minuten und zwei Stunden beträgt, vorzugsweise zwischen 5 Minuten und 1Stunde und insbesondere zwischen 10 und 30 Minuten.

4. Verfahren nach einem der vorangehenden Ansprüche, **dadurch gekennzeichnet, dass** die Dauer des Erwärmens in Schritt (b) ausreichend ist, um Stärkelösungen zu erhalten, die im Wesentlichen frei von körniger Stärke ist.

5. Verfahren nach einem der vorangehenden Ansprüche, **dadurch gekennzeichnet, dass** die Dauer des Erwärmens in Schritt (b) ausreichend ist, um Stärkelösungen mit einer bei 25 °C gemessenen Brookfield-Viskosität von kleiner 6000 Centipoise, vorzugsweise kleiner 5000 Centipoise und insbesondere kleiner 4000 Centipoise zu erhalten.

6. Verfahren nach einem der vorangehenden Ansprüche, **dadurch gekennzeichnet, dass** die Dauer des Erwärmens in Schritt (b) zwischen 15 Sekunden und 30 Minuten beträgt, vorzugsweise zwischen 20 Sekunden und 15 Minuten und insbesondere zwischen 30 Sekunden und 10 Minuten.

7. Verfahren nach einem der vorangehenden Ansprüche, **dadurch gekennzeichnet, dass** das Erwärmen in Schritt (b) durch Injektion von Wasserdampf unter Druck in die in Schritt (a) erhaltene Kolloid-Stärkelösung erfolgt.

8. Verfahren nach einem der vorangehenden Ansprüche, **dadurch gekennzeichnet, dass** die wässrige Stärkeflüssigkeit vor dem Einführen in das Kochgefäß aus Schritt (a) auf eine Temperatur zwischen 100 und 180 °C erhitzt wird.

9. Verfahren nach einem der vorangehenden Ansprüche, **dadurch gekennzeichnet, dass** das in das Kochgefäß aus Schritt (a) eingeführte Stärkepulver einen Feuchtigkeitsgehalt unter 50 %, vorzugsweise zwischen 3 und 30 %, insbesondere zwischen 7 und 22 % aufweist.

10. Verfahren nach einem der vorangehenden Ansprüche, **dadurch gekennzeichnet, dass** die wässrige Stärkeflüssigkeit eine Stärkemilch mit einem Trockensubstanzgehalt kleiner 52 Gewichtsprozent, vorzugsweise zwischen 20 und 50 Gewichtsprozent, insbesondere zwischen 30 und 45 Gewichtsprozent ist.

11. Verfahren nach einem der Ansprüche 1 bis 8, **dadurch gekennzeichnet, dass** die wässrige Stärkeflüssigkeit eine Kolloid-Stärkelösung mit einem Stärkegehalt kleiner 75 Gewichtsprozent, vorzugsweise zwischen 35 und 70 Gewichtsprozent, und insbesondere zwischen 38 und 65 Gewichtsprozent ist.

12. Verfahren nach einem der vorangehenden Ansprüche, **dadurch gekennzeichnet, dass** das Stärkepulver und die Stärke in der wässrigen Stärkeflüssigkeit unabhängig voneinander aus der Stärke von Knollengewächsen, Getreidestärke und Stärke aus Hülsenfrüchten gewählt und eventuell modifiziert werden.

13. Verfahren nach einem der vorangehenden Ansprüche, **dadurch gekennzeichnet, dass** das Stärkepulver und die Stärke in der wässrigen Stärkeflüssigkeit denselben Ursprung haben.

14. Verfahren nach einem der vorangehenden Ansprüche, **dadurch gekennzeichnet, dass** ein Teil der am Ende von Schritt (b) erhaltenen wässrigen Stärkelösung zum Schritt (a) hin wiedergewonnen wird, um als wässrigen Stärkeflüssigkeit zu dienen.

15. Stärkezusammensetzung, welche anhand des Verfahrens nach einem der Ansprüche 1 bis 14 gewonnen werden kann.

16. Stärkezusammensetzung nach Anspruch 15, **dadurch gekennzeichnet, dass** sie einen Gesamtgehalt an Stärke kleiner 75 Gewichtsprozent, vorzugsweise zwischen 35 und 70 Gewichtsprozent, insbesondere zwischen 38 und 65 Gewichtsprozent aufweist.

17. Stärkezusammensetzung nach Anspruch 15 oder 16, **dadurch gekennzeichnet, dass** sie eine bei 25 °C gemessene Brookfield-Viskosität von kleiner 6000 Centipoise, vorzugsweise kleiner 5000 Centipoise und insbesondere kleiner 4000 Centipoise aufweist.

18. Stärkezusammensetzung nach Anspruch 15 bis 17, **dadurch gekennzeichnet, dass** sie im Wesentlichen frei von körniger Stärke ist.

19. Verwendung einer Zusammensetzung nach einem der Ansprüche 15 bis 18, zur Veredelung von Zellulosematerialien, vorzugsweise von plattem Papier oder Karton, vorzugsweise für die Oberflächenbehandlung, die Pigment-Oberflächenbehandlung und die Beschichtung dieser Materialien.

20. Verwendung einer Zusammensetzung nach einem der Ansprüche 15 bis 18, für die Verklebung, insbesondere für die Verklebung von Zellulosematerialien, vorzugsweise von Wellpappe.

## Claims

1. Method for cooking a starchy composition comprising:
(a) a first stage comprising the mixing of at least one starch powder with an aqueous starch slurry containing granular starch and/or gelatinized starch, the starch content of the aqueous starch slurry and the mixing ratio of the starch powder to the aqueous starch slurry being such that the total starch content of the mixture obtained is greater than 45% by weight, preferably comprised between 50 and 82% by weight, and in particular comprised between 52% and 75% by weight, said first stage being carried out at atmospheric pressure, under stirring, in a cooking chamber maintained at a temperature at least equal to the highest gelatinization temperature (TG) of all of the starches present in the mixture for a time comprised between 3 minutes and 2 hours, and
(b) a second stage comprising the heating of the colloidal solution of starch obtained in stage (a), at a pressure above atmospheric pressure and at a temperature comprised between 120°C and 180°C, preferably comprised between 140°C and 180°C for a period comprised between 15 seconds and 30 minutes.

2. Method according to claim 1, **characterized in that** the first stage (stage (a)) is carried out at a temperature at least 5°C, preferably at least 10°C, above the highest gelatinization temperature of all of the starches present in the mixture.

3. Method according to claim 1 or 2, **characterized by** the fact that the duration of the first stage is comprised between 3 minutes and 2 hours, preferably between 5 minutes and 1 hour, and in particular between 10 and 30 minutes.

4. Method according to any one of the preceding claims, **characterized by** the fact that the duration of heating at stage (b) is sufficient to obtain starch solutions essentially free from granular starch.

5. Method according to any one of the preceding claims, **characterized by** the fact that the duration of heating at stage (b) is sufficient to obtain starch solutions having a Brookfield viscosity, measured at 25°C, of less than 6000 centipoises, preferably less than 5000 centipoises and in particular less than 4000 centipoises.

6. Method according to any one of the previous claims, **characterized in that** the duration of heating at stage (b) is comprised between 15 seconds and 30 minutes, preferably between 20 seconds and 15 minutes and in particular between 30 seconds and 10 minutes.

7. Method according to any one of the preceding claims, **characterized in that** the heating at stage (b) is carried out by the injection of steam under pressure into the colloidal starch solution obtained at the end of stage (a).

8. Method according to any one of the preceding claims, **characterized in that** the aqueous starch slurry, before being introduced into the cooking chamber of stage (a), is heated to a temperature comprised between 100°C and 180°C.

9. Method according to any one of the previous claims, **characterized in that** the starch powder introduced into the cooking chamber of stage (a) has a moisture content of less than 50%, preferably comprised between 3 and 30%, in particular comprised between 7 and 22%.

10. Method according to any one of the preceding claims, **characterized in that** the aqueous starch slurry is a starch milk having a dry matter content of less than 52%, preferably comprised between 20 and 50%, in particular comprised between 30 and 45% by weight.

11. Method according to any one of claims 1 to 8, **characterized in that** the aqueous starch slurry is a colloidal solution of starch having a starch content of less than 75%, preferably comprised between 35 and 70%, and in particular comprised between 38 and 65% by weight.

12. Method according to any one of the preceding claims, **characterized by** the fact that the starch powder and the starch in the aqueous starch slurry are chosen independently from the starches of tubers, the starches of cereals and the starches of legumes, optionally modified.

13. Method according to any one of the preceding claims, **characterized in that** the starch powder and the starch in the aqueous starch slurry are of the same origin.

14. Method according to any one of the preceding claims, **characterized by** the fact that part of the starch solution obtained at the end of stage (b) is recycled to stage (a) in order to serve as aqueous starch slurry.

15. Starch composition obtainable by a method according to any one of claims 1 to 14.

16. Starch composition according to claim 15, **characterized by** the fact that it has a total starch content of less than 75%, preferably comprised between 35 and 70%, and in particular comprised between 38 and 65% by weight.

17. Starch composition according to claim 15 or 16, **characterized by** the fact that it has a Brookfield viscosity, measured at 25°C, of less than 6000 centipoises, preferably less than 5000 centipoises and in particular less than 4000 centipoises.

18. Starch composition according to any one of claims 15 to 17, **characterized by** the fact that it is essentially free of granular starch.

19. Use of a composition according to any one of claims 15 to 18, for finishing cellulose materials, preferably paper and flat cardboard, preferably for surface application, pigmented surfacing and coating of said materials.

20. Use of a composition according to any one of claims 15 to 18 for gluing, in particular for the gluing of cellulose materials, preferably corrugated cardboard.
